(19) Europäisches Patentamt
European Patent Office
Office européen des brevets

(11) Publication number: **0 206 111 B1**

(12) **EUROPEAN PATENT SPECIFICATION**

(45) Date of publication of patent specification: **29.08.90**

(51) Int. Cl.[5]: **H 04 M 11/06,** H 04 L 12/54, H 04 Q 11/04

(21) Application number: **86107941.6**

(22) Date of filing: **11.06.86**

(54) **Digital local switching system.**

(30) Priority: **12.06.85 JP 126263/85**
**12.06.85 JP 126264/85**
**12.06.85 JP 126265/85**

(43) Date of publication of application:
**30.12.86 Bulletin 86/52**

(45) Publication of the grant of the patent:
**29.08.90 Bulletin 90/35**

(84) Designated Contracting States:
**DE FR NL**

(56) References cited:
**EP-A-0 105 212**
**EP-A-0 147 865**
**GB-A-2 132 446**

**ERICSSON REVIEW, vol. 61, May 1984, pages 20-27, ISDN, Stockholm, SE; O. BORGSTRÖM et al.: "AXE 10 for ISDN"**

(73) Proprietor: **NEC CORPORATION**
**7-1, Shiba 5-chome Minato-ku**
**Tokyo 108-01 (JP)**

(72) Inventor: **Shimizu, Tomoyoshi**
**c/o NEC Corporation 33-1, Shiba 5-chome**
**Minato-ku Tokyo (JP)**
Inventor: **Yoshida, Yoshinori**
**c/o NEC Corporation 33-1, Shiba 5-chome**
**Minato-ku Tokyo (JP)**
Inventor: **Hashimoto, Masao**
**c/o NEC Corporation 33-1, Shiba 5-chome**
**Minato-ku Tokyo (JP)**
Inventor: **Nakane, Hideki**
**c/o NEC Corporation 33-1, Shiba 5-chome**
**Minato-ku Tokyo (JP)**

(74) Representative: **Vossius & Partner**
**Siebertstrasse 4 P.O. Box 86 07 67**
**D-8000 München 86 (DE)**

(56) References cited:
**IEEE COMMUNICATIONS MAGAZINE, vol. 22, no. 2, February 1984, pages 16-26, IEEE, New York, US; M. GERLA et al.: "Bandwidth allocation and routing in ISDN's"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 206 111 B1

(56) References cited:
INTERNATIONAL CONFERENCE ON THE ISDN AND ITS IMPACT ON INFORMATION TECHNOLOGY, 14th-16th January 1985, pages 41-46, IEE, London, GB; E. CANCER et al.: "The ISDN in Italy: Background, experiments, plans"

PROCEEDINGS OF THE FOURTH INTERNATIONAL CONFERENCE ON COMPUTER COMMUNICATION, EVOLUTIONS IN COMPUTER COMMUNICATIONS, Kyoto, JP, 26th-29th September 1978, pages 557-563, North-Holland Publishing Co., Amsterdam, NL; R. PARODI et al.: "Evaluation of different data communication media within an integrated telecommunication system"

PROCEEDINGS OF THE INTERNATIONAL SWITCHING SYMPOSIUM, Florence, IT, 7th-11th May 1984, Session 22B, pages 1-6, North-Holland, Amsterdam, NL; R. DAVID et al.: "Data feature implementation and ISDN-trial in the Belgian network"

PROCEEDINGS OF THE INTERNATIONAL SWITCHING SYMPOSIUM, Florence, IT, 7th-11th May 1984, Session 21B, pages 1-6, North-Holland, Amsterdam, NL; G. RIBBECK et al.: "EWSD as a basis for ISDN"

**Description**

Background of the Invention

This invention relates to a digital local switching system for switching voice and data signals comprising circuit switching calls, packet switching calls, and digitized signalling information.

The International Telegraph and Telephone Consultative Committee (CCITT) specified the network for offering digital communication service "Integrated Service Digital Network (ISDN)" and submitted I. Series recommendation on the basic specifications toward the end of 1984. According to this basic recommendation, ISDN's user network interface which determines the boundary conditions for effectively connecting users' terminals with the network for optimal communication is constructed with two B channels of 64 kilobits per second (Kbps) and one D channel of 16 Kbps (2B + D). This interface is referred to as the basic access interface which enables, for example, communication through a speech channel (B1) of 64 Kbps, a data channel (B2) of 64 Kbps, and a data channel (D) for low speed packets of 16 Kbps.

The ISDN's user network interface allows each call to select various different services for use. Demands for service to the network or demands for a call are expressed in a message called SETUP. The SETUP messages are packetized and transferred through D channel from a user to the network. The SETUP message is written with (1) a call reference value for identifying the call, (2) bearer capability for designating the transfer rate and mode of connection needed by the particular call, (3) channel identification for identifying which of the two B channels or D channel should be used, and (4) an ISDN destination address of the other party for designating the telephone number thereof. The function to deal with the call controlling procedures with such messages is called layer-3 which is referred to in I.450 and I.451 of the above-mentioned CCITT Recommendation I. Series. The procedure for correctly transferring the messages of the layer-3 is called layer-2 which is mentioned under the title; Link Access Procedure on the D channel (LAP-D) in I.440 and I.441 of the CCITT Recommendation. The LAP-D has functions such as connecting/disconnecting to and from a data link, identifying frames, sequence control, error detection, error restoration, flow control, etc. The LAP-D is provided with a service access point identifier (SAPI) for identifying the service access point between the layers 2 and 3.

Sections I.430 and I.431 of the CCITT Recommendation specifies channel structure, conditions for activation and suspension, speed, electric voltage level, number and forms of connector pins, etc. of layer 1.

In practice, however, various problems should be solved in order to practically structure an ISDN based on the specifications decided as above. One of those problems is how to construct a local switching system. In an ISDN, various different services should be received through a common subscriber interface. Firstly, the switching system, therefore, should accommodate the user network interface specified by the CCITT Recommendation. Secondly, the switching system should connect calls of various types which are incoming from and outgoing to the ISDN subscribers, for instance, calls having both attributes of a circuit switching call and a packet switching call. The packet calls are classified into two types in ISDN; i.e., those transferred via D channel, and those transferred via B channel. Thirdly, the ISDN switching system should handle both of them.

As almost all of the prior switching systems are made for telephones, even if they are digital switching systems, they should be added with an ISDN digital line interface on the side of users in order to connect ISDN subscribers. Even if these ISDN subscribers are successfully connected, the prior switching systems cannot support both the circuit and packet switching. More particularly, since the prior telephone switching systems are made for circuit switching, it is impossible for them to handle packet switching which is fundamentally different from circuit switching in the switching system.

In order to realize packet switching service for ISDN subscribers, a prior local switching system should be either replaced with a digital telephone exchange with means for processing packet-switched data in addition to circuit switched data like the one disclosed in U.S. Patent No. 4,486,878, or provided separately with a switching system dedicated exclusively for packet switching either at local switch or toll switch so that circuit switching calls are controlled to be connected to a circuit switching system and packet switching calls are controlled to be connected to a packet switching system separately.

The former method is simpler in the structure of networks and most preferable in service when viewed from ISDN subscriber side. The method may therefore be the most popular solution when ISDN prevails widely in future. But then, all of the prior switching systems should be invalidated for ISDN subscribers. Immediate application of the former method may not be very economical.

If the latter method is adapted, the switching section of a prior digital switching system can be still used as the switching section for circuit switching calls. In order to promote the introduction of ISDN, the latter method seems to be a more feasible method at least for the initial stage in the ISDN introduction process.

If the latter method should be adapted, however, a problem still remains unsolved; namely, at which location within a network the switching system dedicated to the packet switching should be placed. It is desirable that the location be decided depending on the ratio in traffic between packet switching calls and circuit switching calls; more specifically, if the traffic ratio is high in the packet switching calls, it should be installed at a local switch while if it is high in the circuit switching calls, it should be installed at a toll switch. Generally, it is expected in the initial stage of implementation of ISDN the traffic of packet calls is much smaller than that of circuit switching calls, and it is considered economically more practical that the packet switching system is installed at a toll switch and subscribers should have access to it whenever necessary.

In order to operate such a toll connecting trunk most effectively in view of economical considerations, it is desirable that the toll connecting trunk can be shared in use by circuit switching calls and packet switching calls, and that the ratio in the number between channels used by packet switching calls and those used by circuit switching calls on the toll connecting trunk should be variable or, in other words, should be a variable boundary in structure. The ratio may be semi-variable, but is preferred to be dynamically variable to achieve higher effect. The existing systems cannot meet such requirements.

In ERICSSON REVIEW, Vol. 61, May 1984, pages 20 to 27, ISDN, Stockholm, SE; O. BORGSTRÖM et al.: "AXE 10 for ISDN" a switching system for ISDN is described. This known system comprises the following components:

— The basic digital access of 144 kbit/s using the two-wire subscriber line.

— The frame multiplexer between the subscriber access and the packet switch.

— The packet switching sub-system for complete packet switching functions.

The hardware for the basic digital access consists mainly of a line switch module which serves 64 individual subscriber lines.

In an ISDN it is necessary to be able to offer packet-switching services to all users via the common basic ISDN access. The service can be reached via either a B-channel or the D-channel. As most local exchanges will, however, not have enough demand for packet-switching services to justify a full packet-switching function, the exchanges are equipped with frame multiplexers. The frame multiplexer concentrates the packet traffic from a number of subscribers into semi-permanent 64 kbit/s channels which are routed to an exchange with full packet-switching capability. The function of the frame multiplexer is to multiplex data from different terminals, using either the B-channel or the D-channel for access.

According to this document, different frame multiplexers are used in a local exchange. A D-channel multiplexer is implemented at the digital line interface circuit. Packet user-data are separated from signalling information and multiplexed. The B-channel multiplexer is connected to the time switch in the subscriber stage. This means that it is possible to choose circuit and packet switching services on a per-call basis. A secondary multiplexer may additionally be connected to the time switch.

For complete packet switching functions, a packet switching subsystem is used, comprising Link Handling Modules. The different 64 kbit/s packet channels coming from different local exchanges are connected via semi-permanent connections in a group switch to the Link Handling Modules in the packet switching subsystem. Thus, the system structure integrates circuit and packet switching.

IEEE COMMUNICATION MAGAZINE, Vol. 22, No. 2, February 1984, pages 16 to 26, New York, US; M. GERLA et al.: "Bandwith allocation and routing in ISDNs" shows a TDM transmission and switching technique adoptable for circuit switching (CS) and packet switching (PS) traffic in an integrated network. This document shows the fixed boundary and movable boundary time division multiplexing technique. An integrated CS and PS network comprises CS and PS integrated switches and transmission trunks between the switches. The capacity of each trunk is divided into two parts, one for CS traffic and the other for PS traffic. More specifically, a time frame is defined on each transmission trunk and each frame is divided into N slots and each slot carries one bit or one character, depending on the implementation. Several digital channels can be multiplexed on the trunk by assigning one slot of each frame to each channel. If the CS traffic is not allowed to use any of the slots reserved for PS traffic and vice versa, the multiplexing scheme is said to be of the fixed boundary type. A movable boundary system may have better transmission capacity, when the traffic on one side of the boundary is congested while there is idle capacity on the other side of the boundary. This document suggests to divide the slots into two groups, one of which is reserved for PS traffic and the other group can be used by CS and PS traffic; however, CS traffic has priority in using these slots.

An object of this invention is to provide a digital switching system which is capable of connecting various services of circuit switching as well as packet switching on one single local digital line while minimizing the influence on the local switching system and which is capable of introducing ISDN with higher economical effect while minimizing the influence on the network in the initial stage thereof.

Another object of this invention is to provide a digital switching system which can minimize the necessity of changes in a local switching system which otherwise is entailed by accommodating ISDN subscribers, or in other words, which can connect ISDN subscribers by using the switching section of the existing telephone digital local switching system without modifications and adding an ISDN subscriber interface.

Still another object of this invention is to provide a digital switching system which is so structured that a toll connecting trunk (TCT) can be shared commonly by circuit switching calls and packet switching calls and thus to secure higher effective use of the trunk.

Yet another object of this invention is to provide a digital switching system which is structured to connect packet switching calls incoming from or outgoing to ISDN subscribers to a packet switching system without passing them through a circuit switching system to thereby effectively use the speech pathes of the circuit switching section instead of using it for packet switching calls and at the same time, to minimize the influence of the ISDN introduction on the soft ware of the circuit switching section.

The ISDN digital switching network to which this invention is applicable is assumed that circuit switching calls are to be switched at a local switch and packet switching calls are to be switched at a toll switch. The above objects are achieved by the features of claim 1. Claim 2 is directed to a preferred embodiment of the invention.

The above and other objects, features and advantages of the present invention may be fully understood from the following detailed description and accompanying drawings wherein.

FIG. 1 is a block diagram of an embodiment of the ISDN networks this invention system is applicable;

FIG. 2 is a block diagram of an embodiment of this invention;

FIG. 3 is a block diagram to show the details of the digital line circuit shown in FIG. 2; and

FIG. 4 is a block diagram to show the details of the digital cross-connect module shown in FIG. 2.

The same reference numerals denote the same structural elements in the drawings.

Description of the Preferred Embodiment

Referring to FIG. 1, the digital switching network to which this invention is applicable includes local switches (LS's) 10, 30 and a toll switch (TS) 20. In the following description, the LS 10, the TS 20, and digital terminals connected to the LS 10 is taken as an example. Digital terminals such as a data terminal (DT) 51 and a telephone terminal (TT) 52 are connected to a network terminal (NT) 41. Likewise, digital terminals such as a video terminal (VT) 53 and a telephone terminal (TT) 54 are connected to a network terminal (NT) 42. The above combination of the digital terminals is a mere example. The NT's 41 and 42 are connected to a line module (LM) 11 in the LS 10 via digital access lines (DA's) 71 and 72, respectively. The NT's 41 and 42 are arranged for adjusting the speed between channels on the DA's 71, 72 and the LS 10. The LM 11 is connected to a time division switch (TDSW) 12 for circuit switching and a system packet multiplexer (SPMX) 13.

Voice signals, data signals and signalling information given from the DT 51, TT's 52 and 54, and the VT 53 via the NT's 41 and 42 are separated within the LM 11 into the circuit switching calls transferred through B channels, the B channel packet calls transferred through B channel and the D channel packet calls transferred through D channel. The circuit switching calls are connected to the TDSW 12 while the B channel packet calls and D channel packet calls are connected to the SPMX 13 respectively.

B channel packet calls are mainly used for the packets of relatively high speed such as 64 Kbps. D channel packet calls are used for packet of lower speed. The toll connecting trunks (TCT) 61 and 62 are general digital lines and have bit rates of, for instance, 2.048 megabits per second (Mbps) (primary group), 8.448 Mbps (secondary group) [in North America, 1.544 Mbps (primary group) and 6.312 Mbps (secondary group)]. The TCT 61 is connected to digital cross-connect modules (DXM's) 14 and 21 in switches LS 10 and TS 20. DXM's 14, 21 and 24 are line interface units for respective switches. More particularly, DXM 14 in the LS 10 is connected to the TDSW 12 and the SPMX 13 and has the function to insert/drop separately the packet calls which have been concentrated and multiplexed at the SPMX 13 together with circuit switching calls communicated via the TDSW 12 in channels of the TCT 61 which have been designated in advance. Although not shown in the figures, the DXM of the LS 30 has the similar function to insert/drop separately the packet calls and circuit switching calls in the channels in the TCT 62 designated in advance. Any channel may be designated arbitrarily out of those on the digital circuit, but once designated, the channel should be used in a semi-fixed manner until the designation is changed. The ratio of the channels in number used for packet switching calls against the circuit switching calls depends on the traffic of the time and decided by the negotiation between the LS 10 and the TS 20.

At the TS 20, circuit switching calls and packet switching calls are separated depending on the channels of the digital line designated by DXM's 21 and 24 so that circuit switching calls are to be processed by a time division switch (TDSW) 21 for a circuit switching call while packet switching calls are to be processed by a packet switch (PS) 23.

Referring now to FIG. 2, an embodiment of this invention local switching system (LS) 10 shown in FIG. 1 provides a plurality of line modules (LM) $11_0$ through $11_n$. Each LM has digital line circuits (DLC) 211 and 212. DLC's 211 and 212 are connected at the interfaces which are called U interfaces to digital access lines 71 and 72 within the ISDN local interface. DLC's 211 and 212 have the terminating functions of layer 1 (physical layer) and layer 2 (data link layer). More specifically, DLC's 211 and 212 conduct electric terminating for the U interface, terminating for the layer 1 such as synchronization and terminating for the LAP-D.

Referring now to FIG. 3, DLC's 211 and 212 comprise respectively a line terminator (LT) 311, a D channel handler (DCH) 312 and a dropper/inserter (DI) 313. The LT 311 terminates the layer 1 of a U interface. The DCH 312 terminates the LAP-D. The DI 313 has the function to separately insert/drop B1, B2 and D channels from the format of the ISDN basic interface of (2B + D) and to branch out to the digital line switch (DLSW) 213 when B1 and B2 are circuit switching calls and to the line module packet multiplexer (LMPX) 215 when B1 and B2 are packet switching calls. CCITT recognizes the matters related to U interfaces as a national matter and different specifications will most probably be adapted by respective nations.

Depending on whether B1 and B2 are used for circuit switching calls or packet switching calls, the line module controller (LMC) 214 controls to connect B1 and B2 to either the DLSW 213 or the LMPMX 215 respectively. More specifically, a signalling information from a digital terminal is conveyed through D channel to either the DLC 211 or the DLC 212. The signalling information includes the information to indicate whether the originating call is a packet switching call or a circuit switching call. With such information, the LMC 214 controls to connect B1 and B2 to either the DLSW 213 or the LMPMX 215. The outputs from DLC's 211 and 212, two B channels (B1 and B2) which are circuit switching calls are respectively connected to the DLSW 213. They may be connected by separate highway or multiplexed on single highway.

The DLSW 213 concentrates and multiplexes B channels from DLC's 211 and 212 and connect the same to the TDSW 12.

The TDSW 12 further multiplexes circuit switching calls which have been concentrated by plural LM's $11_0$ through $11_n$ to the degree identical to the multiplexity of the main highway and connects speech lines to line module or trunk module of a relevant opposite party via switch network whenever necessary. At each DCH 312 of DLC's 211 and 212, flag synchronization, zero insertion/deletion, control of errors caused by re-transfer and other processing on layer 2 are conducted with subscriber's terminal to which they are connected and conveys either circuit signal information or D channel packet to the LMC 214.

The LMC 214 receives D channel packets from DLC's 211 and 212, and checkes SAPI in the D channel packets. If the SAPI is O, the LMC 214 processes the circuit signal data for necessary call processing. Along with the processing, necessary control within the system such as communication between the control data 216 of the DLSW 213 and the control data 217 of a switch control section (CTL) 250 or the controlling section of the TDSW 12 is connected. The D channel packets corresponding to SAPI = 16 are separated from control data, added with physical address data which correspond to the connection position of the subscribers, multiplexed by the LMC 214 and sent to the LMPMX 215. The LMPMX 215 multiplexes D channel packets from the LMC 214 and B channel packets from DLC's 211 and 212, to feed them to the SPMX 13. The packets which use B channel are added with physical address corresponding to the position of connection of subscribers in a manner similar to D channel packets. Conversely, the packets received from the SPMX 13 are distributed to appropriate LM's depending on the physical address data included therein. The SPMX 13 are installed in the unit of plural line modules (LM) $11_0$ through $11_n$, and on the up-link side thereof (the direction from LS toward TS is called up-link and the reverse direction down-link herein), packets received from each line module are added with address data identifying line modules to which or from which the packet comes or goes, further multiplexed and sent out to a digital cross-connect module (DXM) 14. On the side of down-link, which line modules LM should be allocated to the module is determined by referring to said address data and the packet is sent out to a relevant module.

The DXM 14 comprises circuit packet multiplexers (CPMX) 221 and 231 for multiplexing circuit switching calls from the TDSW 12 and packet switching calls from the SMPX 13, digital transmission interfaces (DTI) 222 and 231, and a digital cross-connect controller the DXCC 240 for controlling the combination of these plural CPMX's 221 and 231 with DTI's 222 and 232.

Referring to FIG. 4, the DXM will be described in more detail. The DXM comprises the CPMX 221, the DTI 222 and the DXCC 240. The CPMX 221 provides a selector (SEL) 411 on the up-link side for selecting pathes from the TDSW 12 and from the SPMX 13 in the unit of time slots. Moreover the CPMX 221 provides the DEC 413 on the down-link side for separating predetermined time slots of circuit switching calls and adding the remaining time slots with idle channel patterns to send them to the TDSW 12. It also removes circuit switching calls from the packet switching calls to send them to the SPMX 13.

The CPMX 221 is a variable multiplexer and is controlled by an inserter/dropper control memory (IDCM) 412 in time slots. The IDCM 412 is written in and read out with the data of the memory from the DXCC 240 which is a controlling circuit for the whole the DXM 14. The content of the IDCM 412 is controlled by a maintenance controller (MNC) 260 to be re-written via the DXCC 240 to thereby change the band width which circuit switching calls and packet switching calls use.

A digital transmission interface (DTI) 222 has the functions for interfacing the TCT 61 such as bit synchronization, frame synchronization, frame alignment, fault monitoring on digital transmission lines, etc. A transmission interface receiving block (SND) 431 has the functions of inserting a frame pattern, zero suppression, sending out alarm signals to the opposite station, etc. A unipolar/bipolar converter (UB) 432 converts the unipolar signals within the switching system into bipolar signals on the digital transmission line.

On the side of the down-link, the bipolar signals on the digital transmission line from the toll switch are converted into unipolar signals within the switching system and sent to a transmission interface receiving block (RCV) 434. The RCV 434 conducts such processing as bit synchronization, frame synchronization and frame alignment processing for aligning the frame phase of digital transmission line to the phase of the switching system. The RCV 434 has the function to monitor faults on the digital transmission lines and, if it finds a fault, to report the fault to the DXCC 240. The DXCC 240 then reports the fault to the MNC 260.

The MNC 260 is a device for monitoring faults and for controlling devices for maintenance within the switching system. In order to achieve such tasks, the MNC 260 receives and transmits from and to LMC's 214 and 250 the data necessary for operation of the system.

## Claims

1. A digital local telephone exchange system for accommodating a plurality of digital access lines (71, 72), each of said access lines being ascribed to a basic access interface having two B channels for circuit switching calls and packet switching calls and one D channel for packed signalling information or data, said system comprising:

a plurality of line module means (110—11n) for separating said circuit switching calls and packet switching calls from said digital access lines (71, 72);

each of said line module means including:

a plurality of line circuit means (211, 212) for separating said B channel circuit switching calls and packet switching calls and said D channel packeted signalling information or data;

digital line switch means (213) for multiplexing circuit switching calls separated by each of said line circuit means;

line module packet multiplexer means (215);

line module controller means (214) connected to said each line circuits for identifying said packeted signalling information or data on said D channel, for controlling calls by using said signalling information and for outputting said packeted data to said line module packet multiplexer; and

said line module packet multiplexer means (215) multiplexing B channel packets from said line circuits and D channel packets from said line module controller;

system packet multiplexer means (13) for multiplexing said B channel packets from each of said line module packet multiplexer;

time division switch means (12) for connecting circuit switching calls from said line module means; and

digital cross-connect module means (14) having a plurality of circuit-packet multiplexer means (221, 231) corresponding to a toll connecting trunk, each of circuit-packet multiplexer means receiving input circuit switching calls from said time division switch means (12) and packet switching calls from said system packet multiplexer means (13) for multiplexing these calls to said toll connecting trunk.

2. The system as claimed in claim 1 characterized in that each line circuit means comprises a line terminator (311) for connecting digital access lines transmitting voice calls and data calls through B channels of basic access interface and low-speed packets through D channels for receiving signalling information and for terminating a physical layer of said line circuits; a dropper/inserter (313) for separating and inserting said B channels and D channels; and a D channel handler (312) for terminating a data link layer of said D channels.

## Patentansprüche

1. Digitales lokales Fernsprechvermittlungssystem zur Versorgung von mehreren digitalen Zugriffsleitungen (71, 72), wobei jede Zugriffsleitung einer Basiszugriffsschnittstelle mit zwei B-Kanälen für Wählbetriebgespräche und Paketbetriebgespräche und einem D-Kanal für paketierte Nachrichtenübermittlungsinformation oder Daten zugeordnet ist, wobei das System aufweist:

mehrere Leitungsmoduleinrichtungen (110—11n) zum Separieren der Wählbetriebgespräche und der Paketbetriebgespräche von den digitalen Zugriffsleitungen (71, 72), wobei jede der Leitungsmoduleinrichtungen aufweist:

mehrere Leitungsschaltkreiseinrichtungen (211, 212) zum Separieren der B-Kanal-Wählbetriebgespräche, der Paketbetriebgespräche und der D-Kanal-paketierten Nachrichtenübertragungsinformation oder Daten;

eine digitale Leitungsschalteinrichtung (213) zum Multiplexen der Wählbetriebgespräche, die durch jede der Leitungsschaltkreiseinrichtungen separiert wurden;

eine Leitungsmodulpaketmultiplexer-Einrichtung (215);

eine Leitungsmodul-Steuereinrichtung (214), die mit jedem Leitungsschaltkreis verbunden ist, um die paketierten Nachrichtenübertragungsinformationen oder Daten auf dem D-Kanal festzustellen, die Gespräche mittels der Nachrichtenübertragungsinformation zu steuern und die paketierten Daten zum Leitungsmodulpaketmultiplexer auszugeben; und

Leitungsmodulpaketmultiplexereinrichtungen (215), die B-Kanalpakete von den Leitungsschaltkreisen und D-Kanalpakete von der Leitungsmodulsteuereinrichtung multiplexen; Systempaketmultiplexereinrichtungen (13) zum Multiplexen der B-Kanalpakete von jedem der Leitungsmodulpaketmultiplexer;

eine Zeitaufteilungsschalteinrichtung (12) zum Verbinden der Wählbetriebgespräche von der Leitungsmoduleinrichtung; und

eine digitale Querverbindungsmoduleinrichtung (14) mit mehreren Schaltkreispaket-Multiplexereinrichtungen (221, 231), die einem Gebührenverbindungsblock entsprechen, wobei jede der Schaltkreispaket-Multiplexereinrichtungen Eingangswählbetriebgespräche von der Zeitaufteilungsschalteinrichtung (12) und paketbetriebgespräche von der Systempaketmultiplexereinrichtung (13) empfängt, um diese Gespräche zum Gebührenverbindungsblock zu multiplexen.

2. System nach Anspruch 1, dadurch gekennzeichnet, daß jede Leitungsschaltkreiseinrichtung einen Leitungsterminator (311) aufweist, um die digitalen Zugriffsleitungen zu verbinden, die Gespräche und Daten über B-Kanäle der Basiszugriffsschnittstelle und pakete mit niedriger Geschwindigkeit über D-Kanäle übertragen, um Nachrichtenübertragungsinformation zu empfangen und eine Stammebene der Leitungsschaltkreise zu begrenzen; ein Abzweiger/Einschieber (313) zum Separieren und Einschieben der B- und D-Kanäle; und ein D-Kanalhantierer (312), um eine Datenverkettungsebene der D-Kanäle zu begrenzen.

**Revendications**

1. Système de central téléphonique local numérique pour recevoir une multitude de lignes d'accès numériques (71, 72), chacune des lignes d'accès étant imputée à une interface d'accès de base comportant deux canaux B pour les appels de commutation de circuits et les appels de commutation par paquets, et un canal D pour l'information de signalisation en paquets ou données, le système comprenant:

une multitude de moyens (110—11n) de modules de lignes pour séparer les appels de commutation de circuits et les appels de commutations par paquets provenant des lignes d'accès numériques (71, 72);

chacun des moyens de modules de lignes comportant:

une multitude de moyens (211, 212) de circuits de lignes pour séparer les appels de commutation de circuits et les appels de commutation par paquets du canal B et l'information de signalisation en paquets du canal D ou données;

un moyen (213) de commutateur de ligne numérique pour multiplexer les appels de commutation de circuits séparés par chacun des moyens de circuits de lignes;

un moyen (215) de multiplexeur de paquets de modules de lignes;

un moyen (214) de contrôleur de modules de lignes relié à chaque circuit de ligne pour identifier l'information de signalisation en paquets ou données sur le canal D, afin de commander les appels par utilisation de l'information de signalisation ou de sortir la donnée en paquets vers le multiplexeur de paquets de modules de lignes, et

le moyen (215) de multiplexeur de paquets de modules de lignes multiplexant les paquets du canal B provenant des circuits de lignes et les paquets du canal D provenant du contrôleur de modules de lignes;

un moyen (13) de multiplexeur de paquets de système pour multiplexer les paquets du canal B provenant de chaque multiplexeur de paquets de modules de lignes;

un moyen (12) de commutateur à répartition dans le temps pour connecter les appels de commutation de circuits provenant du moyen de module de lignes; et

un moyen (14) de module de connexion transversale numérique ayant une multitude de moyens (221, 231) de multiplexeur de paquets de circuits correspondant à une jonction de connexion interurbaine, chacun des moyens de multiplexeur de paquets de circuits recevant des appels de commutation de circuits d'entrée provenant du moyen (12) de commutateur à répartition dans le temps et les appels de commutation par paquets provenant du moyen (13) de multiplexeur de paquets du système pour multiplexer ces appels vers la jonction de connexion interurbaine.

2. Système selon la revendication 1, caractérisé en ce que chaque moyen de circuit de ligne comprend un terminateur de ligne (311) pour connecter des lignes d'accès numériques transmettant les appels vocaux et les appels de données par l'intermédiaire des canaux B de l'interface d'accès de base et les paquets à faible vitesse par l'intermédiaire des canaux D pour recevoir l'information de signalisation et pour terminer une couche physique des circuits de lignes; un circuit d'élimination/insertion (313) pour séparer et insérer les canaux B et les canaux D; et un circuit (312) de traitement de canal D pour terminer une couche de liaison de données des canaux D.

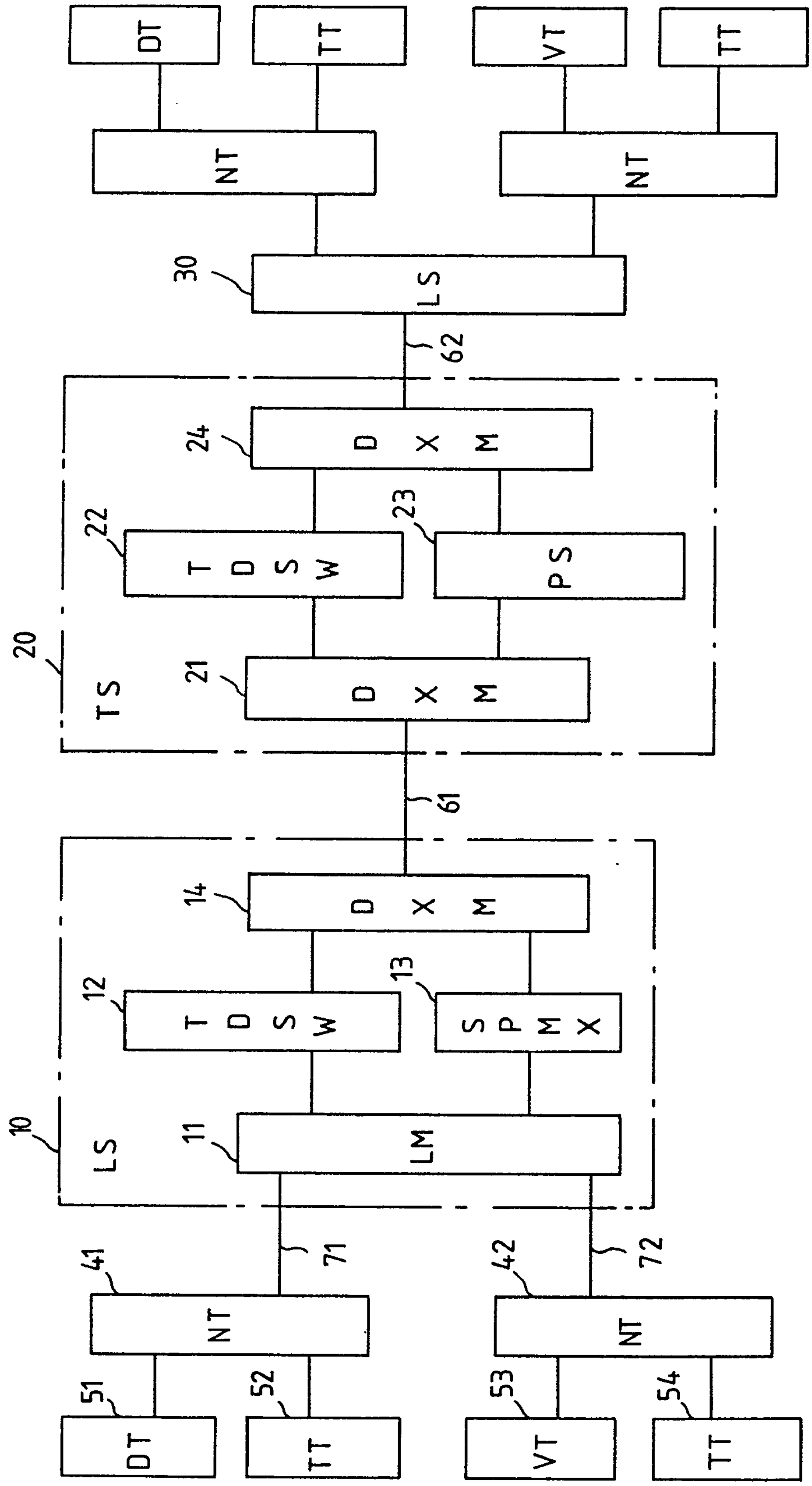
DT
TT
VT
TT
NT
NT
30
LS
62
24
DXM
22
TDSW
23
PS
20
TS
21
DXM
61
14
DXM
12
TDSW
13
SPMX
10
LS
11
LM
41
71
42
72
NT
NT
51
DT
52
TT
53
VT
54
TT

Fig. 1

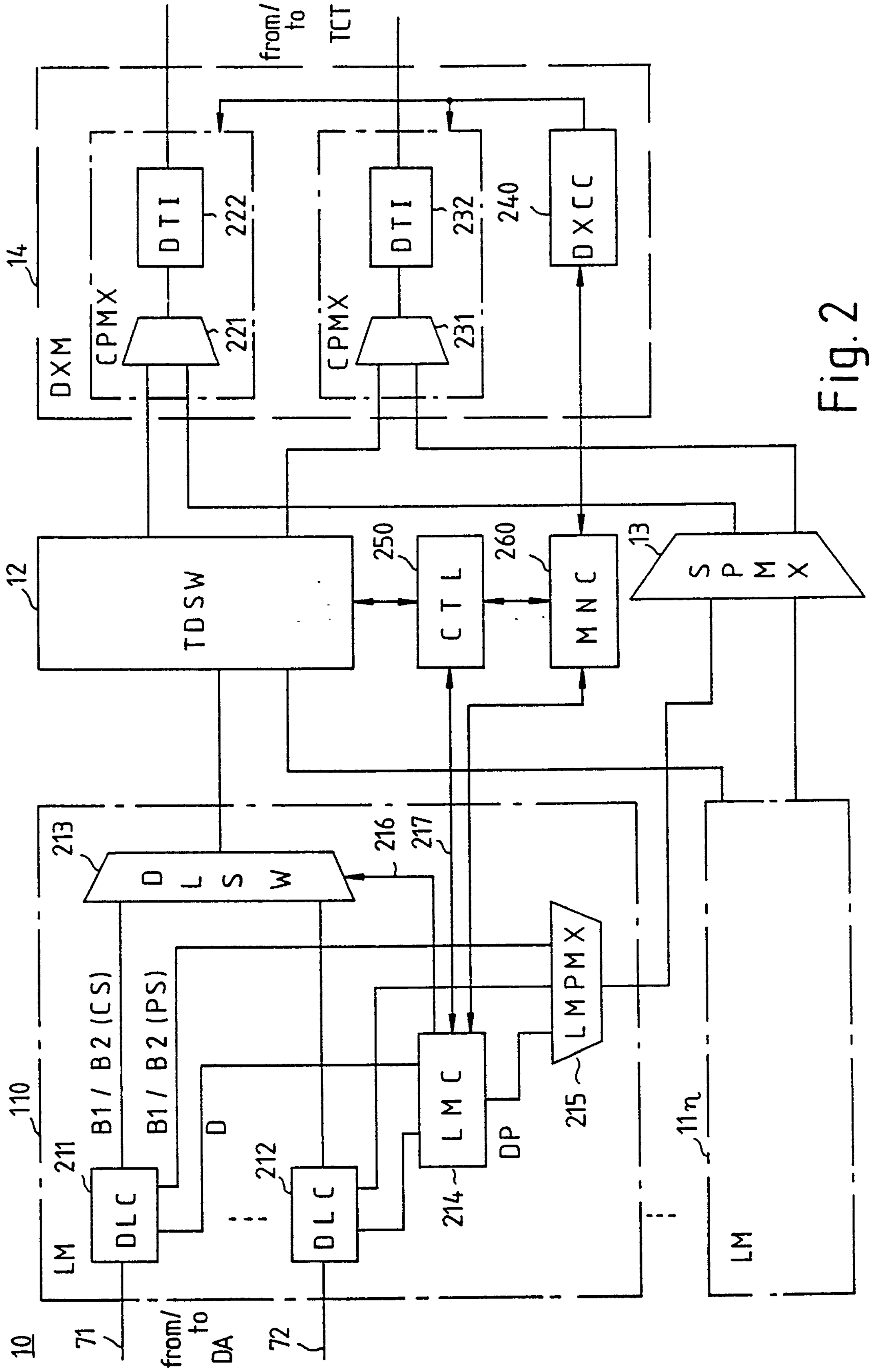
from/
to
TCT
DXM
14
CPMX
DTI
222
221
CPMX
DTI
232
231
240
DXCC
TDSW
12
CTL
250
MNC
260
SPMX
13
LM
110
213
DLSW
216
217
LMPMX
215
B1 / B2 (CS)
B1 / B2 (PS)
D
LMC
214
DP
211
DLC
212
DLC
11n
LM
10
71
72
from/
to
DA

Fig. 2

Fig. 3

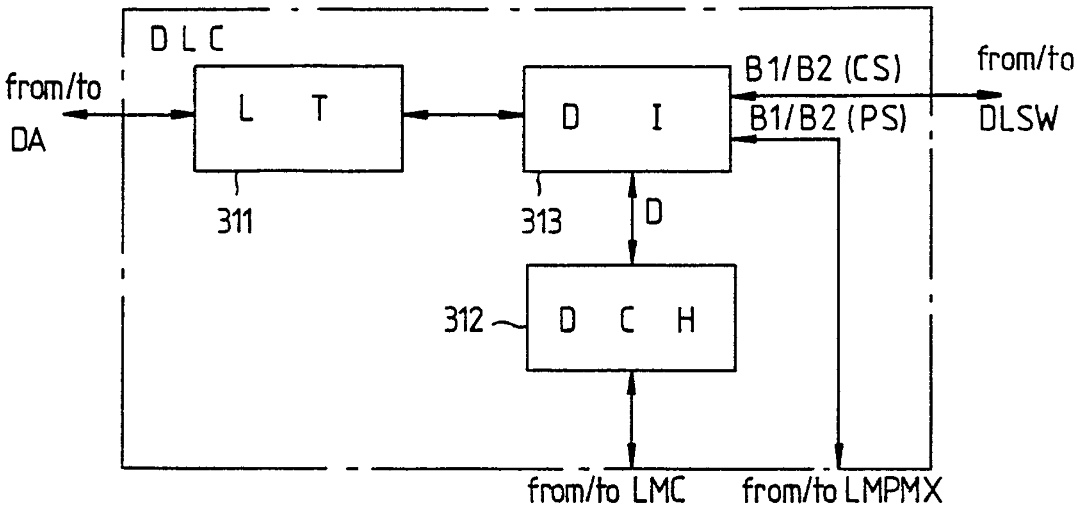
DLC
from/to
DA
L T
311
D I
313
D
B1/B2 (CS)
B1/B2 (PS)
from/to
DLSW
312
D C H
from/to LMC
from/to LMPMX

Fig. 4

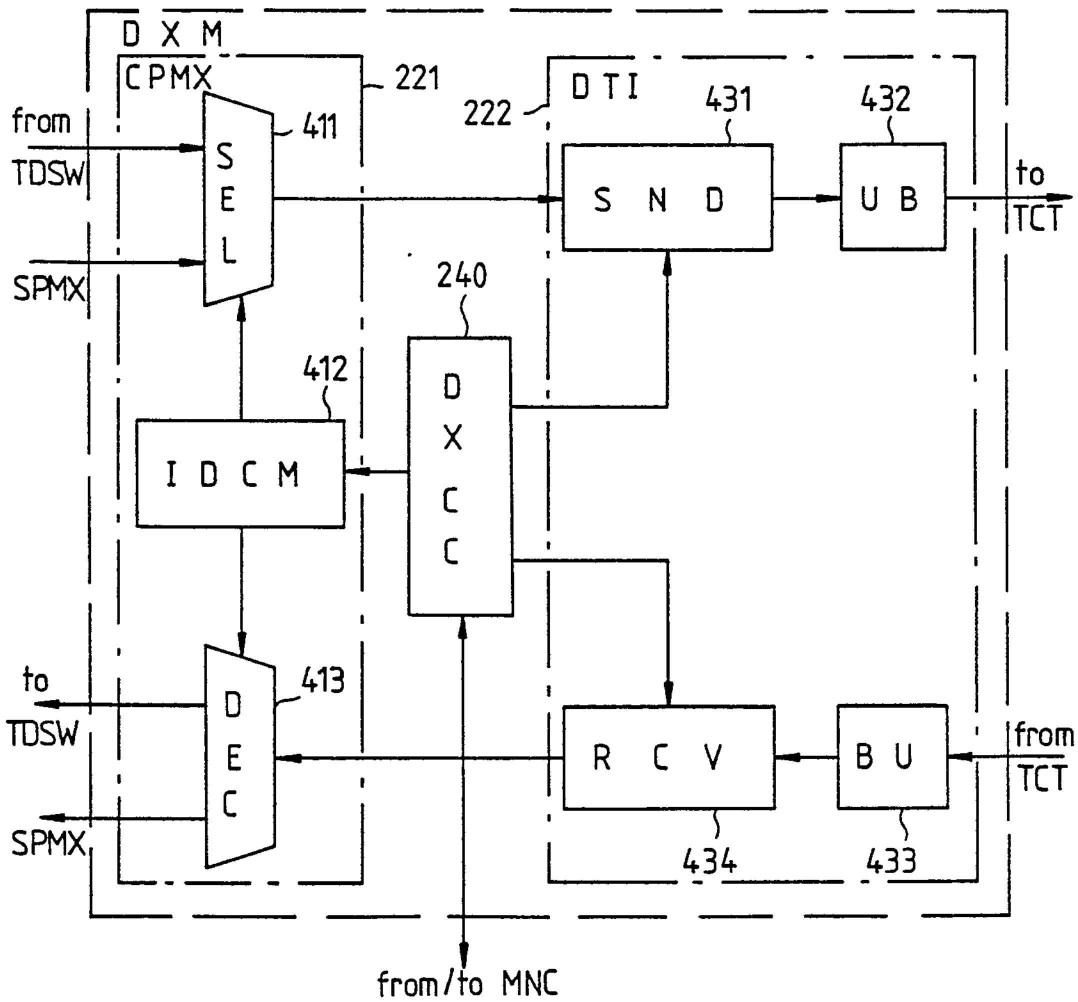
DXM
CPMX
221
222
DTI
431
432
from
TDSW
SPMX
SEL
411
SND
UB
to
TCT
240
412
IDCM
DXCC
to
TDSW
SPMX
DEC
413
RCV
BU
from
TCT
434
433
from/to MNC